Europäisches Patentamt

European Patent Office

Office européen des brevets

(19)

(11) Veröffentlichungsnummer: **0 320 645 B1**

# (12) EUROPÄISCHE PATENTSCHRIFT

(45) Veröffentlichungstag der Patentschrift: **08.01.92**

(21) Anmeldenummer: **88119277.7**

(22) Anmeldetag: **19.11.88**

(51) Int. Cl.5: **B60K  15/01**, B60K 15/04

(54) **Vorrichtung zum Auffangen von Kraftstoffdämpfen beim Betanken eines Kraftstoffbehälters.**

(30) Priorität: **12.12.87 DE 3742256**

(43) Veröffentlichungstag der Anmeldung:
**21.06.89 Patentblatt  89/25**

(45) Bekanntmachung des Hinweises auf die
Patenterteilung:
**08.01.92 Patentblatt  92/02**

(84) Benannte Vertragsstaaten:
**FR GB IT SE**

(56) Entgegenhaltungen:
**WO-A-86/02888
DE-A- 3 605 708
US-A- 4 095 609
US-A- 4 659 346
US-A- 4 747 508**

(73) Patentinhaber: **Daimler-Benz Aktiengesellschaft
Postfach 600202 Mercedesstrasse 136
W-7000 Stuttgart 60(DE)**

(72) Erfinder: **Oeffling, Heiner
Goethestrasse 18
W-7448 Wolfschlugen(DE)**
Erfinder: **Böhringer, Harald
Fleinsbachstrasse 41
W-7303 Neuhausen(DE)**
Erfinder: **Scheurenbrand, Dieter
Hauffstrasse 21
W-7448 Wolfschlugen(DE)**
Erfinder: **Wawra, Helmut, Dr.
J.F.-Weishaarstrasse 43
W-7054 Korb(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Auffangen von Kraftstoffdämpfen beim Betanken eines Kraftstoffbehälters, mit den Merkmalen des Oberbegriffes von Patentanspruch 1.

Bei einer bekannten Vorrichtung dieser Art (DE-OS 36 05 708) ist das selbstschließende Steuerventil im Einfüllstutzen des Kraftstoffbehälters installiert. Bei verschlossenem Einfüllstutzen sorgt es dafür, daß zwischen Aktivkohlefilter und Kraftstoffbehälter keine Verbindung besteht, somit in letzterem für den Betrieb der Brennkraftmaschine eines Kraftfahrzeuges ein erwünschter Überdruck aufrechterhalten wird und außerdem sichergestellt ist, daß bei unfallbedingter Schräg- oder Kopflage des Kraftstoffbehälters aus diesem kein Kraftstoff über den Aktivkohlefilter ins Freie gelangen kann.

Dieses Steuerventil ist zum Betanken in seine Durchlaßstellung zu bringen, damit die aus Kohlenwasserstoffen bestehenden und damit im hohen Maße gesundheitsschädlichen Kraftstoffdämpfe nicht aus dem Kraftstoffbehälter in die Atmosphäre aus- sondern in den Aktivkohlefilter abströmen können.

Zum Öffnen des Steuerventils dient dabei das in den Einfüllstutzen einzuführende Füllrohr einer Zapfpistole. Um hierbei zu vermeiden, daß bereits beim Einführen desselben größere Mengen von Kraftstoffdämpfen ins Freie ausströmen können, ist für das Füllrohr innerhalb des Einfüllstutzens ein diesen verengender Führungskanal vorgesehen, dessen inneres Ende mittels einer selbstschließenden Verschlußklappe gasdicht verschlossen gehalten wird. An dieser Verschlußklappe ist ein gabelförmiger, dem Ventilglied des Steuerventils zugeordneter Betätigungshebel befestigt. Innerhalb des Führungskanals ist eine rohrförmige Dichtung vorgesehen, die bei Einführen des Zapfpistolen-Füllrohres dieses am Außenumfang abdichtend umschließt.

Wenn das Zapfpistolen-Füllrohr die Verschlußklappe in ihre Offenstellung verschwenkt, legen sich die Gabelschenkel des Betätigungshebels an einen Kopf eines Ventilgliedschaftes des Steuerventils an und ziehen dass Ventilglied gegen die Wirkung einer Rückstellkraft in seine eine Verbindung des Kraftstoffbehälters zum Aktivkohlefilter herstellende Offenstellung. Damit können die Kraftstoffdämpfe während des Betankens abströmen, ohne aus dem geöffneten Einfüllstutzen zu entweichen.

Bei dieser Konstruktion ist nachteilig, daß nur bei einwandfreier Funktion des selbstschließenden Steuerventils bei unfallbedingter Schräg- oder Kopflage des Kraftstoffbehälters aus diesem kein Kraftstoff zum Aktivkohle abfließen und dadurch ins Freie ausströmen können. Eine solche Funktion ist aber dann nicht mehr gewährleistet, wenn im Crash-Fall der Einfüllstutzen im Bereich des Steuerventils beispielsweise entsprechend deformiert und dabei dessen Ventilglied in Richtung seiner Offenstellung verlagert wird. Außerdem ist die Unterbringung des Steuerventils sowie die Führung und Abdichtung des Zapfpistolen-Füllrohres im Einfüllstutzen konstruktiv aufwendig und erfordert an diesem Anschlüsse zweier zu diesem extern zu verlegender, vom Kraftstoffbehälter wegzuführender Kraftstoffdampfleitungen, die bei einem Unfallgeschehen leicht abgerissen werden können.

Der Erfindung liegt deshalb die Aufgabe zugrunde, eine Vorrichtung in einer Ausbildung gemäß dem Oberbegriff des Patentanspruches 1 so zu verbessern, daß auch bei nicht oder nicht mehr einwandfrei schließendem Steuerventil bei Schräg- oder Kopflage des Kraftstoffbehälters ein Ausfließen von Kraftstoff über den Aktivkohlefilter nicht erfolgen kann, das Steuerventil vom Einführen der Zapfpistole in den Einfüllstutzen unabhängig arbeitet und von diesem getrennt dem Kraftstoffbehälter in einem unfallsicheren Bereich derart zugeordnet werden kann, daß lediglich noch eine vom Steuerventil zum Aktivkohlefilter führende Kraftstoffdampfleitung verlegt werden muß.

Diese Aufgabe wird erfindungsgemäß durch die kennzeichnenden Merkmale des Patentanspruches 1 gelöst.

In diesem Falle bildet das Steuerventil einen Bestandteil einer Ventileinheit, die wenigstens noch ein weiteres, dem Steuerventil vorgeschaltetes, ab einer bestimmten Schräglage des Kraftstoffbehälters unter Schwerkrafteinfluß selbsttätig schließendes Sicherheitsventil umfaßt, das die Verbindung des Steuerventils mit dem Inneren des Kraftstoffbehälters zu unterbrechen vermag.

Diese Ventileinheit kann an geeigneter Stelle am oberen Wandteil des Kraftstoffbehälters so installiert werden, daß sie in diesen eingreift und somit bei geöffnetem Sicherheitsventil ohne spezielle Verbindungsleitung eine unmittelbare Verbindung zwischen Behälterinnenraum und Steuerventil gegeben ist.

Die Ausstattung der Ventileinheit mit lediglich zwei Ventilen reicht aus, sofern bei Erreichen des maximalen Kraftstoffniveaus der Kraftstoff auch im Einfüllstutzen soweit angestiegen ist, das die automatische Abschaltvorrichtung der Zapfpistole in Funktion treten und die Kraftstoffzufuhr unterbrochen werden kann.

Befindet sich hingegen die Öffnung des Einfüllstutzens weit oberhalb des maximalen Kraftstoffniveaus, ist eine Ausbildung der Ventileinheit nach Patentanspruch 2 vorteilhaft, weil dann nach Schließen des Schwimmerventils zum Ausschalten der Kraftstoffzufuhr durch die Zapfpistole der Kraftstoff im Einfüllstutzen weiter ansteigt.

Bei einer Ausgestaltung der Erfindung nach Patentanspruch 3 bildet die Ventileinheit eine vormontierbare Baueinheit, die sich vorteilhaft installieren läßt.

Eine Ausbildung des Steuerventils nach Patentanspruch 4 bietet zum Zwecke des Betankens vorteilhafte Möglichkeiten der Betätigung des Steuerventils, wie sie sich beispielsweise durch die in den Unteransprüchen 5 bis 8 definierten Konstruktionsvarianten darstellen.

In der Zeichnung sind Ausführungsbeispiele der Erfindung dargestellt. Es zeigen in stark schematisierter Darstellung:

Fig. 1
eine Gesamtansicht eines Kraftstoffbehälters, der mit einer erfindungsgemäßen Fangvorrichtung ausgestattet ist, deren Steuerventil mittels der den Behältereinfüllstutzen unter Verschluß haltenden Tankklappe mechanisch ansteuerbar ist,

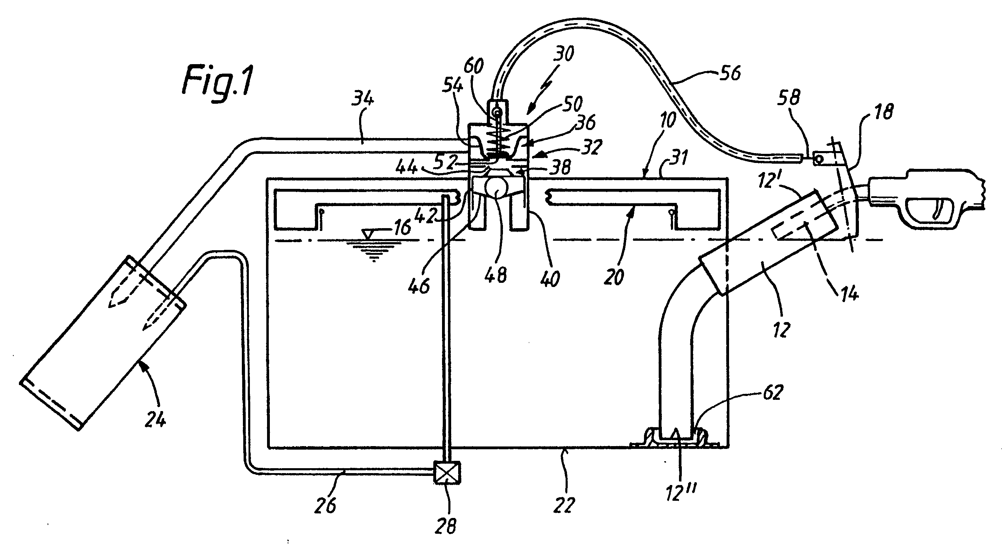

Fig. 2
eine Teilansicht eines Kraftstoffbehälters ähnlich Fig. 1, dessen Steuerventil unterdruckgesteuert ist,

Figuren 2a und 2b
Varianten der Ansteuerung des Steuerventils,

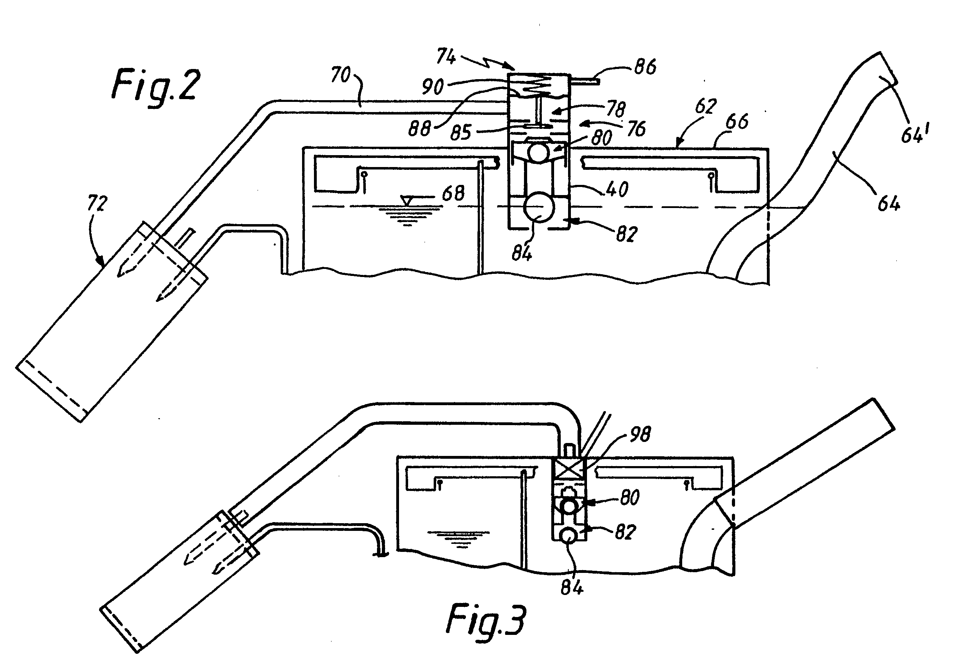

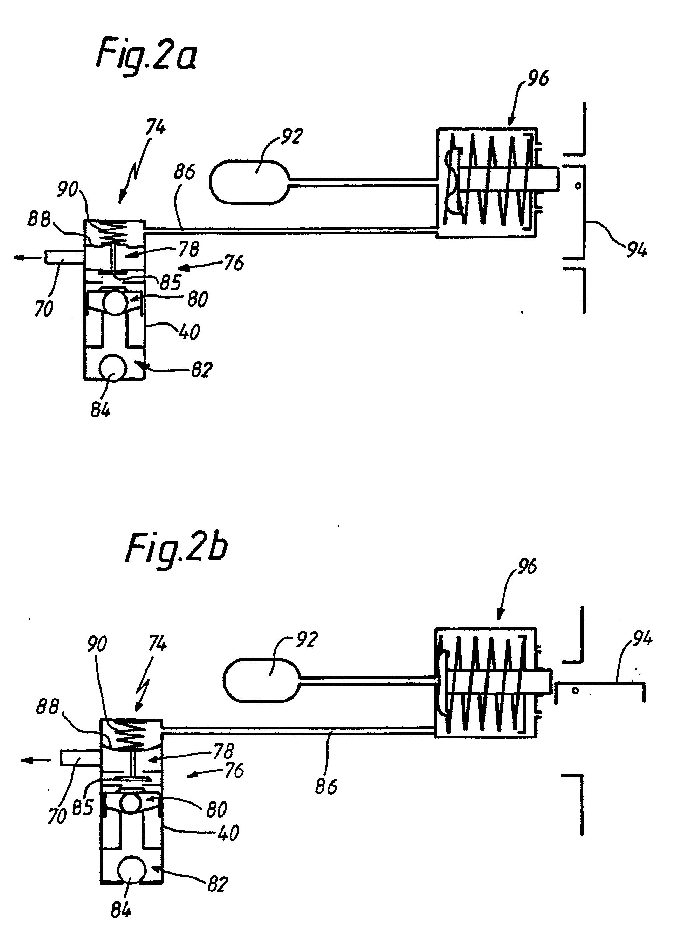

Fig. 3
eine Teilansicht eines Kraftstoffbehälters ähnlich Fig. 2, dessen Steuerventil elektrisch ansteuerbar ist.

10 bezeichnet einen Kraftstoffbehälter, dessen Einfüllstutzen 12 mit seinem ein Füllrohr 14 einer Zapfpistole aufnehmendes, verschließbares Stutzenende 12' dem Kraftstoffbehälter 10 so zugeordnet ist, daß der im Einfüllstutzen 12 beim Betanken ansteigende Kraftstoff bei Erreichen des maximalen Behälterfüllniveaus 16 die Abschaltautomatik einer Zapfpistole zur Unterbrechung der Kraftstoffzufuhr auslöst. Das Stutzenende 12' befindet sich hinter einer Tankklappe 18, die an einem Karosserieteil des betreffenden Kraftfahrzeuges in eine Offenstellung verschwenkbar ist.

Der Kraftstoffbehälter 10 ist in üblicher Weise mit einer Be- und Entlüftungseinrichtung 20 ausgestattet, von der eine beispielsweise aus dem Behälterboden 22 austretende und zu einem Aktivkohlefilter 24 führende Be- und Entlüftungsleitung 26 wegführt, die noch mit einem Tanklüftungsventil 28 ausgestattet ist.

Mit 30 ist als Ganzes eine Vorrichtung zum Auffangen von bei Betankungsvorgängen entstehenden Kraftstoffdämpfen bezeichnet, die eine oberhalb des maximalen Behälterfüllniveaus 16 bzw. in der oberen Behälterwand 31 vorgesehene Ventileinheit 32 aufweist. Diese bildet eine Baueinheit, die beim vorliegenden Ausführungsbeispiel lediglich zwei in Reihe liegende Ventile, nämlich ein über eine Kraftstoffdampfleitung 34 mit dem Aktivkohlefilter 24 verbundenes Steuerventil 36 und ein diesem, in Strömungsrichtung von Kraftstoffdämpfen gesehen, vorgeschaltetes Sicherheitsventil 38, aufweist.

Das Sicherheitsventil 38 weist ein im Gehäuse 40 der Ventileinheit 32 verschiebbar geführtes Ventilglied 42 auf, das unter Schwerkrafteinfluß in seine eine Ventilöffnung 44 verschließende Schließstellung bewegbar ist, sobald der Kraftstoffbehälter 10, z.B. unfallbedingt, eine bestimmte Schräg- oder die Kopflage einnimmt.

Die Verstellung in Schließrichtung wird z.B. mittels einer im Gehäuse 40 auf einer Pfanne 46 aufruhenden Kugel 48 bewerkstelligt, auf der sich das Ventilglied 42 abstützt.

Das sich gemäß Fig. 1 oberhalb des Sicherheitsventils 38 befindende Steuerventil 36 weist ein mittels einer Rückstellfeder 50 selbsttätig in seiner einen Ventildurchgang 52 verschließenden Schließstellung gehaltenes, vorzugsweise durch eine Membran gebildetes Ventilglied 54 auf, das durch die Tankklappe 18, beim Öffnen derselben, mechanisch in seine Durchlaßstellung steuerbar ist, wodurch eine Verbindung des Aktivkohlefilters 24 mit dem Kraftstoffbehälterinnenraum zustande kommt.

Zur Betätigung des Ventilgliedes 54 ist vorzugsweise ein Bowdenzug 56 vorgesehen, dessen Seil 58 einerseits an der Tankklappe 18 und andererseits an einem an der Membran 54 gehaltenen Stößel 60 befestigt ist.

Bei geschlossener Tankklappe 18 und im Fahrbetrieb hält die Rückstellfeder 50 das Steuerventil 36 geschlossen. Dadurch sind zwar im Kraftstoffbehälter 10 entstehende Kraftstoffdämpfe daran gehindert, in den Aktivkohlefilter 24 abzuströmen; zugleich aber ist sichergestellt, daß sich zum einen im Kraftstoffbehälter 10 durch das druckabhängig öffnende Tanklüftungsventil 28 ein erwünschter, definierter Überdruck einstellt sowie die Be- und Entlüftungseinrichtung 20 einwandfrei arbeitet und zum anderen bei Kurvenfahrt kein Kraftstoff über die Kraftstoffdampfleitung 34 und den Aktivkohlefilter 24 auslaufen kann.

Bei Öffnen der Tankklappe 18 wird zugleich das Steuerventil 36 geöffnet, so daß die Kraftstoffdämpfe zur Herstellung eines Druckausgleichs in den Aktivkohlefilter 24 abströmen können bzw. beim Öffnen des Einfüllstutzens 12 kein Kohlenwasserstoff aus diesem herausgedrückt wird.

Dabei kann das innere Ende 12'' des Einfüllstutzens 12 am Behälterboden 22, wie bei 62 angedeutet, siphonartig gefaßt bzw. mit einer Vorlage aus Kraftstoff ausgestattet sein, so daß auch bei größtenteils entleertem Kraftstoffbehälter 10 aus diesem keine Kraftstoffdämpfe in den Einfüllstutzen 12 gelangen können. Sollte das Steuerventil 36 bei geschlossener Tankklappe 18 aus irgendwelchen Gründen nicht oder nicht mehr zuverlässig schließen, so ist im Falle einer beispielsweise unfallbedingten Schräg- oder Kopflage des Kraftstoffbehälters 10, bei der insbesondere auch die Tankklappe 18 in Offenstellung bewegt werden kann, durch das sich dann schließende Sicherheitsventil 38 gewährleistet, das dennoch ein Ausströmen von Kraftstoff über die Kraftstoffdampfleitung 34 und den Aktivkohlefilter 24 nicht erfolgen wird.

Es ist klar, das anstelle des Bowdenzuges 56, 58 auch eine andere mechanisch arbeitende Verbindung, beispielsweise eine entsprechende Hebelverbindung, zwischen Tankklappe 18 und Steuerventil 36 denkbar ist.

Fig. 2 zeigt einen Kraftstoffbehälter 62, bei dem sich das verschließbare äußere Endstück 64' des Einfüllstutzens 64 in einer Ebene oberhalb der oberen Behälterwand 66 befindet.

Demgemäß wird der Kraftstoff beim Betanken im Einfüllstutzen 64 nicht so hoch ansteigen, daß nach Erreichen des maximalen Füllniveaus 68 dieser die Ausschaltautomatik einer Zapfpistole zur Unterbrechung der Zapfpistole auslösen wird. Aus diesem Grunde ist dem Kraftstoffbehälter 62 in gleicher Anordnung wie in Fig. 1 eine über eine Kraftstoffdampfleitung 70 mit einem Aktivkohlefilter 72 verbundene Fangvorrichtung 74 zum Auffangen von Kraftstoffdämpfen zugeordnet, deren Ventileinheit 76 zusätzlich noch das Füllniveau 68 bestimmt. Die Ventileinheit 76 weist deshalb, analog zur Ventileinheit 32, ein Steuerventil 78, diesem vorgeschaltet, ein Sicherheitsventil 80 und zusätzlich noch ein vor diesem liegendes Schwimmerventil 82 auf, dessen beispielsweise kugelförmiger Schwimmer 84 bei Erreichen des maximalen Füllniveaus 68 eine Verbindung des Behälterinnenraumes zum Sicherheitsventil 80 und Steuerventil 78 unterbricht. Daraus resultiert ein Ansteigen des Kraftstoffs im Einfüllstutzen 64, bis dieser schließlich das Füllrohr einer in diesen eingeführten Zapfpistole erreicht und deren Abschaltautomatik auslöst.

Ein weiterer konstruktiver Unterschied besteht in der Art der Betätigung des Steuerventils 78. Dessen Ventilglied 85 ist unterdruckgesteuert, derart, daß ein in einer Saugleitung 86 anstehender Saugrohrunterdruck über eine Membran 88 dasselbe bei laufendem Motor gegen die Wirkung einer Rückstellfeder 90 in seiner Schließstellung hält. Während des Fahrbetriebes ist somit die Verbindung zwischen Kraftstoffbehälter 62 und Aktivkohlefilter 72 für den Aufbau eines Überdruckes im Kraftstoffbehälter 62 unterbrochen.

Zum Betanken ist der Motor abzustellen, worauf durch Öffnen des Steuerventils 78 ein Druckausgleich erfolgt und beim Öffnen des Einfüllstutzens 64 aus diesem keine Kraftstoffdämpfe herausgedrückt werden können (s. Fig. 2).

Alternativ kann dazu das während der Fahrt mittels Unterdruck geschlossen zu haltende Steuerventil 78 auch vom Motor unabhängig ansteuerbar sein, sofern die Saugleitung 86 mit einem Unterdruckbehälter 92 verbunden ist und diese Verbindung über ein beispielsweise durch eine Tankklappe 94 bei deren Öffnen betätigbares Ventil 96 unterbunden wird (siehe Fig. 2a und 2b).

Wie Fig. 3 zeigt kann eine weitere Konstruktionsvariante darin bestehen, das Steuerventil als selbsttätig öffnendes Magnetventil 98 auszubilden.

Zum Schließen während der Fahrt kann das Magnetventil 98 beispielsweise über den Tachometer, zum Schließen während des Motorlaufs über ein Kraftstoffpumpenrelais angesteuert werden. Des weiteren kann es mechanisch betätigt z.B. über die Tankklappe einschaltbar sein, wobei es in diesem Falle in stromlosem Zustand selbsttätig öffnend auszubilden wäre. Es ist dadurch sichergestellt, daß auch im Falle eines Stromausfalles kein Betanken die entstehenden Kraftstoffdämpfe zum Aktivkohlefilter abströmen können.

## Patentansprüche

1. Vorrichtung zum Auffangen von Kraftstoffdämpfen beim Betanken eines Kraftstoffbehälters, mit einem sich oberhalb des maximalen Kraftstoffniveaus befindenden Steuerventil, durch das beim Betanken eine an einem Aktivkohlefilter angeschlossene Kraftstoffdampfleitung mit dem Kraftstoffbehälter selbsttätig verbindbar und nach erfolgtem Betanken die Verbindung wieder unterbrechbar ist,
**dadurch gekennzeichnet,**
daß das Steuerventil (36; 78; 98) beim Betanken von einer Zapfpistole unabhängig in seine Offenstellung steuerbar und Teil einer Ventileinheit (32; 76) mit mindestens zwei in Reihe liegenden Ventilen (36, 38; 78, 80) ist, von denen das weitere Ventil (38; 80) ein dem Steuerventil (36,; 78) vorgeschaltetes, ab einer bestimmten Schräglage des Kraftstoffbehälters (10) unter Schwerkrafteinfluß schließendes Sicherheitsventil (38; 80) ist.

2. Vorrichtung nach Anspruch 1,
**dadurch gekennzeichnet,**
daß die Ventileinheit (76) zur Niveaubegrenzung ein dem Sicherheitsventil (80) vorgeschaltetes und sich innerhalb des Kraftstoffbehälters (10) befindendes und bei Erreichen des maximalen Kraftstoffniveaus (68) schließendes Schwimmerventil (82) aufweist.

3. Vorrichtung nach Anspruch 1 oder 2,
**dadurch gekennzeichnet,**
daß die Ventile (36, 38 bzw. 78, 80, 82) der Ventileinheit (32; 76) in einem gemeinsamen, an der Oberwand (31; 66) des Kraftstoffbehälters (10) angeordneten und mit dem Aktivkohlefilter (24; 72) verbundenden Gehäuse (40) angeordnet sind:

4. Vorrichtung nach einem der vorhergehenden Ansprüche,
**dadurch gekennzeichnet,**
daß eine der Funktionen - Öffnen oder Schließen - des Steuerventils (36; 78; 98) kraftbetätigt durchführbar ist und die andere selbsttätig erfolgt.

5. Vorrichtung nach Anspruch 4,
**dadurch gekennzeichnet,**
daß das Steuerventil (36) bei Öffnen einer Tankklappe (18) mechanisch in seine Offenstellung steuerbar ist.

6. Vorrichtung nach Anspruch 5,
**dadurch gekennzeichnet,**
daß das Steuerventil (36) mittels eines durch die Tankklappe (18) betätigbaren Bowdenzuges (56, 58) in seine Offenstellung steuerbar ist.

7. Vorrichtung nach einem der vorhergehenden Ansprüche 1 bis 4,
**dadurch gekennzeichnet,**
daß eine der Funktionen des Steuerventils (78) unterdruckgesteuert ist.

8. Vorrichtung nach einem der vorhergehenden Ansprüche 1 bis 3,
**dadurch gekennzeichnet,**
daß das Steuerventil (98) ein während der Fahrt oder beim Lauf des Motors geschlossenes Magnetventil ist.

## Claims

1. A device for collecting fuel fumes on filling a fuel tank with a control valve situated over the maximum fuel level by means of which, when filling the tank, a fuel fume duct connected with an activated carbon filter is automatically connectable with the fuel tank, and the connection can be interrupted again after the tank has been filled, characterized in that the control valve (36; 78; 98), on filling the tank, can be controlled into its opening position independently of a fuel dispensing pistol, and forms part of a valve unit (32; 76) with at least two valves (36, 38; 78, 80) arranged in series, of which the further valve (38; 80) is a safety valve (38; 80) fitted upstream of the control valve (36; 78), closing from a specific slanting position of the fuel tank (10) under the influence of the force of gravity.

2. A device according to claim 1, characterized in that the valve unit (76) has, for level limitation, has a float valve (82) mounted upstream of the safety valve (80), situated inside the fuel tank (10) and closing when the maximum fuel level has been reached (68).

3. A device according to either claim 1 or 2, characterized in that the valves (36, 38 or 78, 80, 82) of the valve unit (32; 76) are mounted in a housing (40) fitted on the upper wall (31, 66) and connected with the active carbon filter (24; 72).

4. A device according to one of the foregoing claims, characterized in that one of the functions - opening or closing - of the control valve (36; 78; 98) can be carried out by power operation, and the other is effected automatically.

5. A device according to claim 4, characterized in that the control valve (36), on the opening of a tank butterfly valve (18) is mechanically controllable into its open position.

6. A device according to claim 5, characterized in that the control valve (36) is controllable into its open position by means of a Bowden cable (56, 58) actuatable through the tank butterfly valve (18).

7. A device according to one of the foregoing claims 1 to 4, characterized in that one of the functions of the control valve (78) is vacuum-controlled.

8. A device according to one of the foregoing claims 1 to 3, characterized in that the control valve (98) is a magnetic valve closed during travel or when the motor is running.

## Revendications

1. Dispositif pour recueillir des vapeurs de carburant lors du remplissage d'un réservoir de carburant, avec une soupape de commande qui se trouve au-dessus du niveau maximal de carburant et qui permet de relier automatiquemnet au réservoir de carburant, lors de son remplissage, une conduite de vapeurs de carburant raccordée à un filtre à charbon actif, et d'interrompre à nouveau cette liaison une fois le remplissage terminé, caractérisé en ce que la soupape de commande (36 ; 78 ; 98) peut être amenée de façon commandée à sa position d'ouverture lors du remplissage indépendamment d'un pistolet de remplissage, et fait partie d'un ensemble de soupapes (32 ; 76) comprenant au moins deux soupapes (36, 38 ; 78, 80) reliées en série, dont l'autre soupape (38 ; 80) est une soupape de sûreté (38 ; 80) qui précède la soupape de commande (36 ; 78) et qui se ferme sous l'action de la force de gravité à partir d'une position inclinée donnée du réservoir de carburant (10).

2. Dispositif selon la revendication 1, caractérisé en ce que l'ensemble de soupapes (76) présente, pour la limitation de niveau, une soupape à flotteur (82) qui précède la soupape de sûreté (80), se trouve à l'intérieur du réservoir de carburant (10) et se ferme à l'atteinte du niveau maximal de carburant (68).

3. Dispositif selon la revendication 1 ou 2, caractérisé en ce que les soupapes (36, 38 ou 78, 80, 82) de l'ensemble de soupapes (32 ; 76) sont disposées dans un carter commun (40), disposé à la paroi supérieure (31 ; 66) du réservoir de carburant (10) et relié au filtre à charbon actif (24 ; 72).

4. Dispositif selon l'une des revendications précédentes, caractérisé en ce qu'une des fonctions - ouverture ou fermeture - de la soupape de commande (36 ; 78 ; 98) peut être accomplie sous l'action d'une force extérieure, tandis que l'autre s'accomplit automatiquement.

5. Dispositif selon la revendication 4, caractérisé en ce que la soupape de commande (36) peut être amenée de façon commandée mécaniquement à sa position d'ouverture lors de l'ouverture d'un portillon de réservoir (18).

6. Dispositif selon la revendication 5, caractérisé en ce que la soupape de commande (36) peut être amenée de façon commandée à sa position d'ouverture au moyen d'un ensemble de câble Bowden (56, 58) pouvant être actionné par le portillon de remplissage (18).

7. Dispositif selon l'une des revendications 1 à 4, caractérisé en ce qu'une des fonctions de la soupape de commande (78) est commandée par dépression.

8. Dispositif selon l'une des revendications 1 à 3, caractérisé en ce que la soupape de commande (98) est une soupape électromagnétique qui est fermée pendant la marche ou lorsque le moteur tourne.

Fig.1

Fig.2

Fig.3

EP 0 320 645 B1

# Fig.2a

# Fig.2b